# EUROPÄISCHE PATENTSCHRIFT

(11) **EP 0 921 585 B1**
(45) Veröffentlichungstag und Bekanntmachung des Hinweises auf die Patenterteilung: **03.04.2002**
(21) Anmeldenummer: 98120915.8
(22) Anmeldetag: 04.11.1998
(51) Int. Cl.: H01M 8/06, C01B 3/48, C01B 3/38, C01B 3/32, C01B 3/58

(54) **Vorrichtung und Verfahren zur Wasserdampfreformierung eines Kohlenwasserstoffs**
Device and method for steam reforming of hydrocarbons
Dispositif et méthode pour le reformage à la vapeur d' eau d'hydrocarbures

(30) Priorität: 05.12.1997 DE 19754013
(43) Veröffentlichungstag der Anmeldung: 09.06.1999
(73) Patentinhaber: XCELLSIS GmbH, 73230 Kirchheim / Teck-Nabern (DE)
(72) Erfinder: Autenrieth, Rainer, 89155 Erbach (DE); Boneberg, Stefan, 89134 Blaustein (DE); Heil, Dietmar, 88477 Hörenhausen (DE); Schüssler, Martin, 89077 Ulm (DE); Strobel, Barbara, 89160 Dornstadt (DE); Wieland, Steffen, 70180 Stuttgart (DE); zur Megede, Detlef Dr., 73230 Kirchheim/Teck (DE)
(74) Vertreter: Dahmen, Toni, Dipl.-Ing.

(56) Entgegenhaltungen:
- EP-A- 0 529 329
- EP-A- 0 861 802
- DE-A- 3 803 080
- FR-A- 1 417 758
- US-A- 3 909 299
- US-A- 5 110 559
- PATENT ABSTRACTS OF JAPAN vol. 096, no. 001, 31. Januar 1996 (1996-01-31) & JP 07 232901 A (AQUEOUS RES:KK), 5. September 1995 (1995-09-05)
- PATENT ABSTRACTS OF JAPAN vol. 095, no. 008, 29. September 1995 (1995-09-29) & JP 07 126001 A (AQUEOUS RES:KK), 16. Mai 1995 (1995-05-16)

## Beschreibung

Die Erfindung bezieht sich auf eine Vorrichtung und ein Verfahren zur Wasserdampfreformierung eines Kohlenwasserstoffs nach dem Oberbegriff des Anspruchs 1 beziehungsweise 4. Vorrichtungen dieser Art sind beispielsweise als mobile Methanolreformierungsanlagen für brennstoffzellenbetriebene Kraftfahrzeuge bekannt, um den für die Brennstoffzellen benötigten Wasserstoff bereitzustellen. Für diese mobile Anwendung besteht ganz besonders die Anforderung, auf die typischen raschen Lastwechsel im Fahrzeugbetrieb ausreichend rasch reagieren und vor allem nach dem jeweiligen Systemstart möglichst rasch Wasserstoff für die Brennstoffzellen liefern zu können und dies mit einer relativ kompakt aufgebauten Reformierungsanlage zu erreichen.

Bekanntermaßen verläuft die Wasserdampfreformierungsreaktion zur Reformierung des verwendeten Kohlenwasserstoffs, z.B. Methanol, endotherm und erfolgt bei einer gegenüber Raumtemperatur erhöhten Reaktionstemperatur. Bei einem Kaltstart der Reformierungsanlage kann daher mit der Wasserdampfreformierungsreaktion nicht sofort Wasserstoff bereitgestellt werden, vielmehr müssen zunächst die Komponenten der Anlage auf eine entsprechende Betriebstemperatur gebracht werden. Gerade im Anwendungsfall brennstoffzellenbetriebener Kraftfahrzeuge besteht der Wunsch, den warmgelaufenen Normalbetrieb der Reformierungsanlage so schnell wie möglich zu erreichen, damit die Brennstoffzellen möglichst frühzeitig mit im laufenden Fahrbetrieb erzeugtem Wasserstoff gespeist werden können. Es wurden bereits verschiedentlich Methoden für einen beschleunigten Kaltstart von Reformierungsanlagen vorgeschlagen.

Eine übliche Methode, wie sie in den Patentschriften US 4 820 594 und US 5 110 559 dokumentiert ist, besteht darin, innerhalb eines Reformergehäuses dem Reformer, in welchem die Reformierungsreaktion ablaufen soll, einen Brenner zuzuordnen, durch den ein zugeführtes, brennbares Kohlenwasserstoff/Luft-Gemisch bei offener Flamme verbrannt wird, um dadurch den Reformer aufzuheizen. In der letztgenannten Patentschrift wird darüber hinaus vorgeschlagen, die erzeugten heißen Verbrennungsabgase in einen nachgeschalteten CO-Shiftkonverter weiterzuleiten, um auch diesen damit aufzuheizen.

Bei einer weiteren, durch die Patentschriften FR 1 417 757 und FR 1 417 758 dokumentierten Methode wird bei einem Kaltstart einer Anlage zur Wasserdampfreformierung von Methanol zunächst ein Gemisch aus Methanol und Oxidationsmittel in den Reformer eingeleitet, um dort eine entsprechende Verbrennungsreaktion zu initiieren und damit den Reformer aufzuheizen. Danach wird die Zufuhr des Oxidationsmittels beendet und stattdessen das zu reformierende Methanol/Wasserdampf-Gemisch zugeführt und die Reformierungsreaktion gestartet.

In der Offenlegungsschrift JP 07126001 A ist eine kompakt aufgebaute Reformierungsanlage beschrieben, bei der ein Verdampfer, ein Reformer und ein CO-Oxidator vorgesehen sind, die Teil eines Plattenstapelaufbaus sind, wobei sie in einer zur Stapellängsachse senkrechten Querrichtung seriell hintereinanderliegend angeordnet sind. Die drei Anlagenkomponenten sind parallel mittels eines zugeordneten Brenners mit zugehörigen Heizschichten des laminaren Aufbaus beheizbar.

In der Patentschrift US 5 516 344 ist eine kompakt gebaute Reformierungsanlage offenbart, bei der ein Reformer und ein CO-Schichtkonverter untereinanderliegend und durch eine Trennplatte voneinander abgeteilt in einem gemeinsamen Gehäuse angeordnet sind. Am Gehäuse ist ein Brenner vorgesehen, mit dem ein zugeführtes, brennbares Gemisch bei offener Flamme verbrannt wird, wobei die heißen Verbrennungsgase in das Gehäuse geleitet werden, um den Reformer und den CO-Shiftkonverter sowie die verschiedenen beteiligten Gasströme aufzuheizen.

In der Patentschrift US 4 746 329 ist ein Methanolreformierungsreaktor mit einem zylindrischen Aufbau aus mehreren radial aufeinanderfolgenden Ringräumen offenbart. An der Unterseite des Reaktorzylinders befindet sich eine Brennereinheit, die von einem katalytischen Brenner gebildet sein kann. Die heißen Brennerabgase werden durch den radial äußersten Ringraum nach oben geführt und dann in den radial innen benachbarten Ringraum umgelenkt, wo sie in Wärmekontakt zu einem radial innen anschließenden Reformierungsringraum stehen. Dabei erstreckt sich ein Oberteil des Reformierungsraums über die äußeren, das Verbrennungsgas führenden Ringräume hinaus, so daß in diesem Bereich eine geringere Betriebstemperatur herrscht. Dieser kühlere, obere Reformierungsraumbereich dient auf diese Weise als CO-Shifteinheit. An den Reformierungsraum schließt sich innen ein Verdampferringraum an, der seinerseits radial nach innen über einen zylindrischen Docht an einen inneren Temperierraum angrenzt, in den die Verbrennungsgase nach abwärtiger Durchströmung des zweitäußersten Ringraums im unteren Zylinderbereich umgelenkt werden. Als Brennstoff für die Brennereinheit dient das wasserstoffhaltige Anodengas eines Brennstoffzellensystems. Die Verbrennungsabgase enthalten daher Wasserdampf, von dem nach Austreten der Verbrennungsabgase an der oberen Zylinderstirnseite wenigstens ein Teil dem Verdampfer zugeführt wird.

In der Offenlegungsschrift DE 38 03 080 A1 sind eine Reformierungsanlage zur Erzeugung von Wasserstoff, Kohlenmonoxid und Kohlendioxid enthaltenden Synthesegasen aus kohlenwasserstoffhaltigen Einsatzstoffen sowie ein Betriebsverfahren hierfür bekannt, mit denen die Einsatzstoffe zunächst einer wenigstens einstufigen Primärreformierung, dann einer partiellen Oxidation, anschließend einer weiteren, sekundären Reformierung und schließlich einer Kohlenmonoxidumwandlung unterzogen werden. Dabei wird die Abwärme der exothermen Kohlenmonoxidumwandlung für die primäre Dampfreformierung genutzt, wozu die entsprechende primäre Reformierungsstufe und die CO-Konvertierungsstufe über eine wärmeleitende Trennwand in Wärmekontakt stehen.

Der Erfindung liegt als technisches Problem die Bereitstellung einer Vorrichtung und eines Verfahrens der eingangs genannten Art zugrunde, mit denen bei einem Kaltstart möglichst rasch der warmgelaufene Normalbetrieb zur effektiven Durchführung der Reformierungsreaktion erreicht werden kann, beispielsweise zur schnellen Bereitstellung von Wasserstoff für ein Brennstoffzellensystem eines Kraftfahrzeuges.

Die Erfindung löst dieses Problem durch die Bereitstellung einer Vorrichtung mit den Merkmalen des Anspruchs 1 sowie eines Verfahrens mit den Merkmalen des Anspruchs 4.

Bei der Vorrichtung nach Anspruch 1 sind sowohl der Verdampfer als auch der Hauptreformer über eine jeweilige Brennereinheit beheizbar, in der ein brennbares Gemisch katalytisch flammenlos verbrannt werden kann. Damit sind der Verdampfer und der Hauptreformer nach einem Kaltstart direkt beheizbar. Gleichzeitig steht die wenigstens eine Vorreformierungsstufe mit der CO-Shiftstufe oder der CO-Oxidationsstufe in Wärmekontakt. Somit können diese wärmeleitend gekoppelten Komponenten gemeinsam durch direktes oder indirektes Beheizen einer der beiden Komponenten während eines Aufheizvorgangs beim Kaltstart auf ihre normale Betriebstemperatur gebracht werden. Außerdem ist der Ausgang der CO-Entfernungseinheit direkt mit dem Eingang der jeweiligen katalytischen Brennereinheit verbindbar. Dadurch kann am Ausgang der CO-Entfernungseinheit anstehendes, katalytisch verbrennbares Gas bei Bedarf in die katalytischen Brennereinheiten zwecks dortiger Verbrennung eingespeist werden, um dadurch allein oder zusätzlich zu direkt dort eingespeistem Brennstoff zur schnellen Aufheizung des Verdampfers und des Hauptreformers beizutragen.

Einen vorteilhaften Aufheizvorgang während eines Kaltstarts enthält das Verfahren nach Anspruch 4. In einer ersten Betriebsphase wird Wasserstoff oder der im späteren Normalbetrieb zu reformierende Kohlenwasserstoff als Brennstoff in die katalytischen Brennereinheiten eingespeist und dort unter zusätzlicher Einspeisung eines sauerstoffhaltigen Gases katalytisch verbrannt, um die Brennereinheiten auf vorzugsweise 150°C bis 350°C aufzuheizen, wodurch der Verdampfer und der Hauptreformer entsprechend erhitzt werden. In einer nachfolgenden zweiten Betriebsphase wird dann begonnen, im vorerhitzten Verdampfer das zur Reformierung benötigte Kohlenwasserstoff/Wasserdampf-Gemisch zu bereiten, wobei zu diesem Zeitpunkt ein verglichen mit dem späteren Normalbetrieb geringerer Anteil des Kohlenwasserstoffs in den Verdampfer eingespeist wird. Das in Verdampfer erhitzte Gemisch wird durch die Vorreformierungseinheit hindurchgeleitet, wodurch diese und folglich die mit ihr in Wärmekontakt stehende CO-Shiftstufe und/oder CO-Oxidationsstufe erwärmt werden. Im vorerwärmten Hauptreformer kann die noch vergleichsweise geringe Menge an zugeführtem Kohlenwasserstoff reformiert werden. Das entstehende, wasserstoffreiche und vom Hauptreformer erhitzte Reformatgas gelangt zur CO-Entfernungseinheit, die dadurch zusätzlich aufgeheizt wird, und von dort in die katalytischen Brennereinheiten, wo es als Brennstoff dienen kann, so daß die direkte Einspeisung eines entsprechenden Brennstoffs gestoppt oder jedenfalls reduziert werden kann. Der Verdampfer und/oder der Hauptreformer können während dieses Aufheizvorgangs bei einer Temperatur oberhalb der Normalbetriebstemperatur während des späteren Normalbetriebs betrieben werden, um den Aufheizvorgang weiter zu beschleunigen. Sobald dann die Anlagenkomponenten im wesentlichen ihren warmgelaufenen Betriebszustand erreicht haben, wird in den Normalbetrieb übergegangen, indem der in den Verdampfer eingespeiste Anteil des zu reformierenden Kohlenwasserstoffs entsprechend erhöht wird. Das ausgangsseitig der CO-Entfernungseinheit anstehende Reformatgas besteht dann im wesentlichen aus Wasserstoff, ohne daß Kohlenmonoxid in einem störenden Maß enthalten ist. Dieses Produktgas braucht nun nicht mehr länger in die katalytischen Brennereinheiten eingespeist werden, sondern kann der beabsichtigten Verwendung zugeführt werden, z.B. zur Speisung der Anodenseite eines Brennstoffzellensystems.

Bei einer nach Anspruch 2 weitergebildeten Vorrichtung beinhaltet die Vorreformierungseinheit zwei Vorreformierungsstufen, und die CO-Entfernungseinheit besitzt seriell hintereinanderliegend sowohl eine CO-Shiftstufe als auch eine CO-Oxidationsstufe. Letztere stehen mit jeweils einer Vorreformierungsstufe in Wärmekontakt, um das rasche Aufheizen dieser Komponenten beim Kaltstart zu unterstützen. Außerdem sind Mittel zum Absperren der Verbindung zwischen der CO-Shiftstufe und der CO-Oxidationsstufe und eine stromabwärts dieser Absperrmittel zur CO-Oxidationsstufe führende Zwischeneinspeiseleitung vorgesehen. Über letzere kann ein Stoff, beispielsweise ein brennbares Gemisch, gezielt in die CO-Oxidationsstufe eingespeist werden. Zum Betrieb dieser Vorrichtung eignet sich speziell ein nach Anspruch 5 weitergebildetes Verfahren, bei welchem die Verbindung zwischen CO-Shiftstufe und CO-Oxidationsstufe zu Beginn der ersten Betriebsphase getrennt und zu Beginn der zweiten Betriebsphase geöffnet wird. Gleichzeitig wird während der ersten Betriebsphase über die zugehörige Zwischeneinspeiseleitung in die CO-Oxidationsstufe ein dort katalytisch verbrennbares Gemisch eingeleitet, wodurch die CO-Oxidationsstufe direkt aktiv aufgeheizt wird.

Eine nach Anspruch 3 weitergebildete Vorrichtung dient in ihrem warmgelaufenen Betriebszustand zur Speisung eines Brennstoffzellensystems mit dem benötigten Wasserstoff durch Zuführung des wasserstoffreichen Reformatgases. Um während des Aufheizvorgangs bei einem Kaltstart das am Ausgang der CO-Entfernungseinheit anstehende Gas, das möglicherweise für das Brennstoffzellensystem schädlich ist, unter Umgehung des Brennstoffzellensystems direkt den katalytischen Brennereinheiten zuführen zu können, ist ein entsprechendes Umschaltventil vorgesehen. Zum Betrieb dieser Vorrichtung eignet sich speziell ein nach Anspruch 6 weitergebildetes Verfahren. Dabei wird das ausgangsseitig der CO-Entfernungseinheit anstehende Gas erst ab dem Ende der zweiten Betriebsphase des Aufheizvorgangs bei einem Kaltstart mit dem betreffenden Eingang des Brennstoffzellensystems verbunden, während es ansonsten in die katalytischen Brennereinheiten eingeleitet wird.

Gemäß eines nach Anspruch 7 weitergebildeten Verfahrens wird der Systemdruck im Reformierungs-Gasströmungsweg während des Aufheizvorgangs von null an bis zum Normalbetriebsdruck im Normalbetrieb erhöht.

Bei einem nach Anspruch 8 weitergebildeten Verfahren werden die heißen Verbrennungsabgase der katalytischen Brennereinheiten zum Aufheizen eines Kühlkreislaufs eines Brennstoffzellensystems genutzt, dessen Anodenseite im Normalbetrieb vom wasserstoffreichen Reformatgas gespeist wird.

Zur weiteren Beschleunigung des Aufheizvorgangs trägt bei einem nach Anspruch 9 weitergebildeten Verfahren ein Durchströmen zusätzlicher Strömungskanäle, die in einer oder mehreren nicht aktiv beheizten Systemkomponenten vorgesehen sind, mit den heißen Verbrennungsabgasen der katalytischen Brennereinheiten bei.

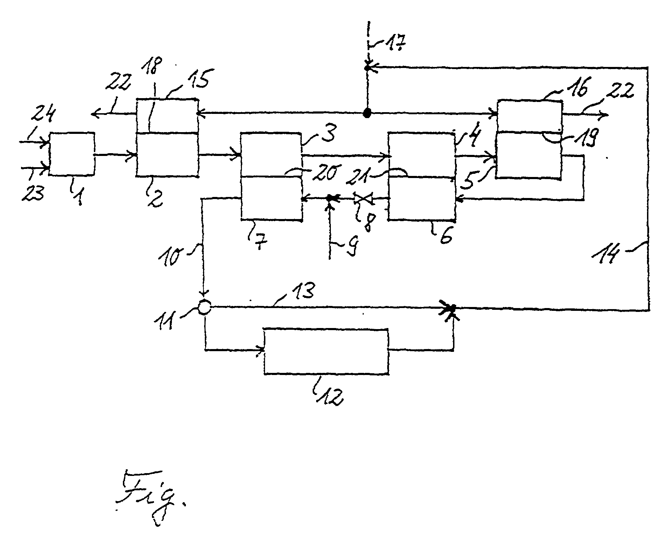

Vorteilhafte Ausführungsbeispiele der Erfindung werden nachfolgend unter Bezugnahme auf die Zeichnung beschrieben.
Die einzige Figur zeigt ein Blockdiagramm einer Vorrichtung zur Wasserdampfreformierung eines Kohlenwasserstoffs.

Die in der Figur blockdiagrammatisch wiedergegebene Reformierungsanlage ist insbesondere zur Wasserdampfreformierung von Methanol in einem brennstoffzellenbetriebenen Kraftfahrzeug verwendbar, um den für das Brennstoffzellensystem benötigten Wasserstoff aus flüssig mitgeführtem Methanol zu erzeugen. Eintrittseitig beinhaltet die Anlage eine Dosiereinrichtung 1, der über zwei zugehörige Eingangsleitungen 23, 24 zum einen Wasser und zum anderen flüssiges Methanol zuführbar sind, und die über geeignete Dosierpumpen verfügt, um diese Stoffe in einen angeschlossenen Verdampfer 2 in steuerbaren Anteilen einzudosieren. An den Verdampfer 2 schließt sich eine Vorreformierungseinheit an, die aus zwei hintereinandergeschalteten Vorreformierungsstufen 3, 4 besteht und deren Ausgang zum Eingang eines Hauptreformers 5 führt. An den Ausgang des Hauptreformers 5 ist eine CO-Entfernungseinheit angeschlossen, die aus einer CO-Shiftstufe 6 und einer dieser nachgeschalteten CO-Oxidationsstufe 7 besteht. In der Verbindung zwischen CO-Shiftstufe 6 und CO-Oxidationsstufe 7 befindet sich ein ansteuerbares Absperrventil 8. Stromabwärts desselben mündet in diese Verbindung eine Zwischeneinspeiseleitung 9. Eine von der CO-Oxidationsstufe 7 abführende Produktgasleitung 10 führt zu einem ansteuerbaren Umschaltventil 11, mit dem der Produktgasstrom wahlweise entweder einem Brennstoffzellensystem 12 zugeführt oder unter Umgehung desselben durch eine Bypassleitung 13 direkt zu einer Brennerzufuhrleitung 14 weitergeleitet werden kann, an die zwei katalytische Brennereinheiten 15, 16 angeschlossen sind. Optional kann die Brennstoffzufuhrleitung 14 einen eigenen Speiseanschluß 17 aufweisen, wie in der Figur gestrichelt angedeutet, um bei Bedarf ein brennbares Gemisch unter Umgehung der CO-Oxidationsstufe 7 direkt in die katalytischen Brennereinheiten 15, 16 einspeisen zu können. Alternativ zur gezeigten parallelen Anordnung können die beiden Brennereinheiten 15, 16 seriell angeordnet sein.

Der Verdampfer 2 und der Hauptreformer 5 stehen mit je einer der beiden katalytischen Brennereinheiten 15, 16 über eine jeweilige wärmeleitende Trennwand 18, 19 in Wärmekontakt. In gleicher Weise stehen die erste Vorreformierungsstufe 3 mit der CO-Oxidationsstufe 7 und die zweite Vorreformierungsstufe 4 mit der CO-Shiftstufe 6 über je eine wärmeleitende Trennwand 20, 21 in Wärmekontakt. Die beiden Vorreformierungsstufen 3, 4, der Hauptreformer 5, die CO-Shiftstufe 6 und die CO-Oxidationsstufe 7 beinhalten jeweils für diese Komponenten übliche Katalysatormaterialien und sind von einem der herkömmlichen Bautypen. Dabei ist die Blockdiagrammdarstellung in der Figur nicht so zu verstehen, daß getrennt gezeichnete Blöcke zu zwingend räumlich getrennten Komponenten gehören, vielmehr können je nach Bedarf in herkömmlicher Weise auch im Blockdiagramm getrennt gezeichnete Komponenten in einer gemeinsamen Baueinheit integriert sein.

Im Normalbetrieb bei warmgelaufener Anlage dosiert die Dosiereinrichtung 1 Wasser und Methanol in vorgegebenen Anteilen in den Verdampfer 2. Dieser bereitet daraus ein überhitztes Methanol/Wasserdampf-Gemisch, das dann in die erste 3 und von dort in die zweite Vorreformierungsstufe 4 geleitet und dabei entsprechenden Vorreformierungsprozessen unterzogen wird. Anschließend gelangt das vorreformierte Gemisch in den Hauptreformer 5, wo der hauptsächliche Reformierungsumsatz des Methanols stattfindet. Das dadurch gebildete, bereits wasserstoffreiche, jedoch im allgemeinen noch einen zu hohen CO-Anteil enthaltende Reformatgas gelangt aus dem Hauptreformer 5 in die CO-Shiftstufe 6, wo die CO-Konzentration durch die CO-Shiftreaktion, d.h. über das Wassergas-Gleichgewicht, vermindert wird. Über das im Normalbetrieb geöffnete Absperrventil 8 wird dann der Reformatgasstrom in die CO-Oxidationsstufe 7 eingeleitet, in der die CO-Konzentration nochmals verringert wird, und zwar hier unter Nutzung der CO-Oxidationsreaktion. Hierfür kann je nach Bedarf Luft oder ein anderer sauerstoffhaltiger Gasstrom über die Zwischeneinspeiseleitung 9 in die CO-Oxidationsstufe 7 zudosiert werden.

Das am Ausgang der CO-Oxidationsstufe 7 gelieferte, über die Produktgasleitung 10 entnehmbare Reformatgas besteht folglich im wesentlichen aus Wasserstoff, wobei die CO-Konzentration unterhalb eines vorgegebenen Grenzwertes liegt, der sicherstellt, daß damit keine Vergiftung des mit dem Reformatgas im Brennstoffzellensystem in Kontakt kommenden Katalysatormaterials auftritt. Das Reformatgas wird über das entsprechend geschaltete Umschaltventil 11 in den Anodenteil des Brennstoffzellensystems 12 eingespeist. Das aus dem Anodenteil austretende Gas kann über die Brennerzufuhrleitung 14 in die katalytischen Brennereinheiten 15, 16 eingespeist werden. Der Betrieb der Brennereinheiten 15, 16 wird, gegebenenfalls unterstützt durch zusätzliche Brennstoffeinspeisung über den Speiseanschluß 17, in dem Maß betrieben, wie dies zur Aufrechterhaltung der Betriebstemperaturen in den verschiedenen Anlagekomponenten erforderlich ist. Dabei werden von den Brennereinheiten 15, 16 der Verdampfer 2 und der die endotherme Reformierungsreaktion durchführende Hauptreformer 5 beheizt. Die beiden Vorreformierungsstufen 3, 4 werden vom durchströmenden, heißen, zu reformierenden Stoffgemisch auf Temperatur gehalten, was analog für die CO-Shiftstufe 6 und die CO-Oxidationsstufe 7 aufgrund des hindurchtretenden heißen Reformatgasstroms gilt, wobei über die wärmeleitenden Brennwände 20, 21 zusätzlich Wärme zwischen den beiden Vorreformierungsstufen 3, 4 einerseits und der CO-Shiftstufe 6 sowie der CO-Oxidationsstufe 7 andererseits mittels Festkörperwärmeleitung übertragen werden kann.

Die wie gezeigt aufgebaute Anlage eignet sich nach Auslösen eines Kaltstarts, wie er besonders im Fahrzeugeinsatz häufig auftritt, unter Verwendung eines speziellen, nachfolgend näher erläuterten Kaltstart-Betriebsverfahrens für eine vergleichsweise rasche Bereitstellung des wasserstoffreichen Reformatgases, d.h. für ein schnelles Erreichen des warmgelaufenen Betriebszustands. Dazu wird nach Auslösen eines Kaltstarts ein Aufheizvorgang mit mehreren unterschiedlichen Betriebsphasen durchgeführt, wobei zu Beginn einer ersten Betriebsphase die Verbindung zwischen CO-Shiftstufe 6 und CO-Oxidationsstufe 7 durch Schließen des Absperrventils 8 getrennt wird. Außerdem wird das Brennstoffzellensystem 12 aus dem Gasströmungsweg herausgenommen, indem das Umschaltventil 11 so geschaltet wird, daß die Produktgasleitung 10 mit der Bypassleitung 13 verbunden ist. Während der ersten Betriebsphase wird dann der CO-Oxidationsstufe 7 über die Zwischeneinspeiseleitung 9 ein brennbares Gemisch zugeführt, das Methanol und/oder zwischengespeicherten Wasserstoff als Brennstoff sowie ein sauerstoffhaltiges Gas, wie Luft, enthält. Das Gemisch wird in der CO-Oxidationsstufe 7 mindestens teilweise katalytisch verbrannt, wodurch die CO-Oxidationsstufe 7 und folglich die mit ihr in Wärmekontakt stehende erste Vorreformierungsstufe 3 aufgeheizt werden, vorzugsweise auf eine Temperatur zwischen 150°C und 350°C. Eine ebensolche Erwärmung findet durch entsprechende katalytische Verbrennungsprozesse in den beiden Brennereinheiten 15, 16 statt, wozu diesen noch brennbare Bestandteile aus der CO-Oxidationsstufe 7 über die Produktgasleitung 10, die Bypassleitung 13 und die Brennerzufuhrleitung 14 sowie je nach Bedarf zusätzlich brennbares Gemisch über den Speiseanschluß 17 zugeführt wird. Durch die resultierende Erhitzung der beiden Brennereinheiten 15, 16 werden der Verdampfer 2 und der Hauptreformer 5 entsprechend erwärmt. Vorzugsweise werden der Verdampfer 2 und der Hauptreformer 5 dabei während des Aufheizvorgangs auf einer Temperatur betrieben, die oberhalb der Betriebstemperatur im späteren Normalbetrieb liegt, um den Aufheizvorgang zu beschleunigen.

Sobald die Anlagenkomponenten durch diese erste Betriebsphase einen gewissen erwärmten Betriebszustand erreicht haben, der es erlaubt, in eingeschränktem Umfang einen Reformierungsbetrieb zu starten, wird von der ersten auf eine zweite Betriebsphase übergegangen, wobei zu Beginn der zweiten Betriebsphase die Verbindung zwischen CO-Shiftstufe 6 und CO-Oxidationsstufe 7 durch Öffnen des Absperrventils 8 freigegeben und die zusätzliche Einspeisung von Wasserstoff und/oder Methanol über den Speiseanschluß 17 in die beiden Brennereinheiten 15, 16 sowie über die Zwischeneinspeiseleitung 9 in die CO-Oxidationsstufe 7 vorzugsweise bis auf null reduziert wird. Gleichzeitig wird nun mit dem Zudosieren von Wasser und Methanol in den Verdampfer 2 begonnen, wobei in dieser zweiten Betriebsphase das Methanol nur mit einem Anteil zugegeben wird, der geringer als im Normalbetrieb bei warmgelaufener Anlage ist. Der Verdampfer 2 bereitet daraus ein relativ wasserreiches Methanol/Wasserdampf-Gemisch, das in die erste 3 und von dort in die zweite Vorreformierungsstufe 4 weitergeleitet wird. Dabei heizen sich die beiden Vorreformierungsstufen 3, 4 zusätzlich durch das hindurchströmende, heiße Gemisch auf. Gleichzeitig erfährt letzteres eine gewisse Vorreformierung. Das Gemisch gelangt dann in den vorerhitzten Hauptreformer 5 und erhitzt sich dort wieder, während gleichzeitig der hauptsächliche Methanolreformierungsumsatz erfolgt. Der so gebildete, heiße, wasserstoffreiche Reformatgasstrom wird in die CO-Shiftstufe 6 geleitet, die sich dadurch und im übrigen durch den Wärmekontakt mit der zweiten Vorreformierungsstufe 4 weiter erwärmt. Gleichzeitig wird die CO-Konzentration über die CO-Shiftreaktion reduziert. Das Reformatgas gelangt dann über das offene Absperrventil 8 in die CO-Oxidationsstufe 7 und von dort weiter über die Produktgasleitung 10, die Bypassleitung 13 und die Brennerzufuhrleitung 14 in die beiden Brennereinheiten 15, 16. Dabei wird der im Reformatgas enthaltene Wasserstoff in der CO-Oxidationsstufe 7 und den beiden Brennereinheiten 15, 16 katalytisch verbrannt, wobei das hierzu erforderliche sauerstoffhaltige Gas, z.B. Luft, über die Zwischeneinspeiseleitung 9 und je nach Bedarf zusätzlich über den Speiseanschluß 17 zudosiert wird.

Die mit diesen exothermen Verbrennungsprozessen erzeugte Wärme dient dazu, die Anlagenkomponenten auf Temperatur zu halten und die Energie zum Verdampfen der flüssig in den Verdampfer 2 dosierten Bestandteile Wasser und Methanol sowie zur Durchführung der endothermen Reformierungsreaktion bereitzustellen. Die zudosierte Methanolmenge wird dabei in dieser zweiten Betriebsphase gerade so groß gewählt, daß deren Energiegehalt ausreicht, die für das Methanol/Wasserdampf-Gemisch notwendige Verdampfungs- und Reformierungsenergie aufzubringen, ohne die Brennereinheiten 15, 16 und die CO-Oxidationsstufe 7 zu überhitzen. Der zudosierte Wasseranteil wird dagegen während der zweiten Betriebsphase verglichen mit dem späteren Normalbetrieb auf einen deutlich höheren Wert eingestellt. Das überschüssige Wasser wird zur Kühlung des Verdampfers 2 und als Wärmeträgermedium benutzt, mit dem die Wärme noch schneller in die nicht aktiv beheizten Anlagenkomponenten geleitet werden kann. Als weitere Maßnahme wird während des Aufheizvorgangs der Systemdruck der Anlage von null an bis zum Normalbetriebsdruck erhöht, der im späteren Normalbetrieb beibehalten wird. Dies beinhaltet insbesondere eine entsprechende Druckerhöhung des Methanol/Wasserdampf-Gemisches während der zweiten Betriebsphase.

Sobald durch die Prozeßführung in der zweiten Betriebsphase die Anlage im wesentlichen ihre Normalbetriebstemperatur und ihren Normalbetriebsdruck erreicht hat, wird die zweite Betriebsphase beendet und vom Aufheizvorgang zum Normalbetrieb der Anlage übergegangen. Dazu wird der Anteil des in den Verdampfer 2 eindosierten Methanols auf den Normalbetriebswert erhöht, und das Umschaltventil 11 wird umgeschaltet, um das über die Produktgasleitung 10 herausgeführte, im wesentlichen aus Wasserstoff bestehende Reformatgas ab diesem Zeitpunkt in das Brennstoffzellensystem 12 einzuleiten. Anschließend wird die Anlage im Normalbetrieb gefahren, wie dies oben erläutert ist.

Die obige Beschreibung eines vorteilhaften Ausführungsbeispiels zeigt, daß durch die Erfindung eine kompakt aufbaubare, effiziente Vorrichtung zur Wasserdampfreformierung eines Kohlenwasserstoffs und ein Betriebsverfahren hierfür realisiert werden, mit dem die Reformierungsanlage bei einem Kaltstart sehr rasch auf ihren normalen, warmgelaufenen Betriebszustand gebracht werden kann. Neben dem oben erläuterten Beispiel und den dort genannten Varianten sind weitere Ausführungsformen der Erfindung realisierbar. So können z.B. die Vorreformierungseinheit aus nur einer Vorreformierungsstufe und die CO-Entfernungseinheit nur aus der CO-Shiftstufe oder der CO-Oxidationsstufe bestehen, wobei dann die beiden betreffenden Stufen miteinander in Wärmekontakt stehen. Des weiteren kann das aus den Brennereinheiten 15, 16 austretende, heiße Verbrennungsabgas 22 zum Aufheizen eines für das Brennstoffzellensystem 12 vorgesehenen Kühlkreislaufs benutzt werden. Eine weitere Option besteht darin, in den nicht aktiv beheizten Anlagenkomponenten, wie den Vorreformierungsstufen 3, 4 und der CO-Shiftstufe 6, durchströmbare Heizkanäle vorzusehen, durch die dann während des Aufheizvorgangs zur Beschleunigung desselben das heiße Verbrennungsabgas 22 der Brennereinheiten 15, 16 hindurchgeleitet werden kann.

## Patentansprüche

1. Vorrichtung zur Wasserdampfreformierung eines Kohlenwasserstoffs mit
- einem Verdampfer (2),
- einer dem Verdampfer nachgeschalteten Vorreformierungseinheit mit wenigstens einer Vorreformierungsstufe (3, 4),
- einem der Vorreformierungseinheit nachgeschalteten Hauptreformer (5),
- einer dem Hauptreformer nachgeschalteten CO-Entfernungseinheit mit einer CO-Shiftstufe (6) und/oder einer CO-Oxidationsstufe (7) und
- wenigstens einer katalytischen Brennereinheit (15, 16)
**dadurch gekennzeichnet, daß**
- eine erste katalytische Brennereinheit (15) mit dem Verdampfer (2) und eine zweite katalytische Brennereinheit (16) mit dem Hauptreformer (5) über je ein wärmeleitendes Trennmedium (18, 19) in Wärmekontakt stehen,
- der Ausgang der CO-Entfernungseinheit (6, 7) direkt mit dem Eingang wenigstens einer der katalytischen Brennereinheiten (15, 16) verbindbar ist und
- die wenigstens eine Vorreformierungsstufe (3, 4) mit der CO-Shiftstufe (6) oder der CO-Oxidationsstufe (7) über ein jeweiliges wärmeleitendes Trennmedium (20, 21) in Wärmekontakt steht.

2. Vorrichtung nach Anspruch 1, weiter
**dadurch gekennzeichnet, daß**
- die Vorreformierungseinheit zwei seriell angeordnete Vorreformierungsstufen (3, 4) und die CO-Entfernungseinheit eine CO-Shiftstufe (6) und eine nachgeschaltete CO-Oxidationsstufe (7) umfassen, wobei die eine Vorreformierungsstufe (3) mit der CO-Oxidationsstufe (7) und die andere Vorreformierungsstufe (4) mit der CO-Shiftstufe (6) in Wärmekontakt stehen, und
- Mittel (8, 9) zum Absperren der Verbindung zwischen der CO-Shiftstufe (6) und der CO-Oxidationsstufe (7) sowie zur Stoffzwischeneinspeisung in die CO-Oxidationsstufe vorgesehen sind.

3. Vorrichtung nach Anspruch 1 oder 2, weiter
**gekennzeichnet durch**
ein Umschaltventil (11), mit dem der Ausgang der CO-Entfernungseinheit (6, 7) wahlweise direkt mit einer Brennerzufuhrleitung (14) oder mit einem Gaseingang eines Brennstoffzellensystems (12) verbindbar ist.

4. Verfahren zur Wasserdampfreformierung eines Kohlenwasserstoffs mittels einer Vorrichtung nach einem der Ansprüche 1 bis 3, bei dem
- im warmgelaufenen Normalbetrieb der zu reformierende Kohlenwasserstoff und Wasser in den Verdampfer (2) eingespeist und dort zu einem Kohlenwasserstoff/Wasserdampf-Gemisch aufbereitet werden, das in die wenigstens eine Vorreformierungsstufe (3, 4) und von dort in den Hauptreformer (5) weitergeleitet wird, wo der Kohlenwasserstoff reformiert wird, und das im gebildeten Reformatgas enthaltene Kohlenmonoxid in der CO-Entfernungseinheit (6, 7) wenigstens teilweise entfernt wird,
**dadurch gekennzeichnet, daß**
- bei einem Kaltstart ein Aufheizvorgang durchgeführt wird, während dem in einer ersten Betriebsphase in die beiden katalytischen Brennereinheiten (15, 16) ein brennbares Gemisch aus extern zugeführtem Wasserstoff und/oder Kohlenwasserstoff einerseits und einem sauerstoffhaltigen Gas andererseits eingespeist und dort katalytisch verbrannt wird, in einer nachfolgenden zweiten Betriebsphase die externe Zufuhr des Wasserstoffs bzw. Kohlenwasserstoffs mit die katalytischen Brennereinheiten beendet wird, Wasser und der Kohlenwasserstoff in einem gegenüber dem Normalbetrieb geringeren Kohlenwasserstoffanteil in den Verdampfer (2) eingespeist und erhitzt werden, das erhitzte Gemisch in die Vorreformierungseinheit (3, 4) und von dort weiter in den Hauptreformer (5) geleitet und das gebildete Reformatgas in die katalytischen Brennereinheiten (15, 16) geleitet und dort katalytisch verbrannt wird und im Anschluß an die zweite Betriebsphase zum Normalbetrieb übergegangen wird, wozu der in den Verdampfer zudosierte Kohlenwasserstoffanteil erhöht und die Einspeisung des erzeugten Reformatgases in die katalytischen Brennereinheiten (15, 16) reduziert wird.

5. Verfahren nach Anspruch 4, weiter
**dadurch gekennzeichnet, daß**
beim Betrieb einer Vorrichtung nach Anspruch 2 die Verbindung zwischen der CO-Shiftstufe (6) und der CO-Oxidationsstufe (7) zu Beginn der ersten Betriebsphase getrennt und zu Beginn der zweiten Betriebsphase geöffnet wird und über die Zwischeneinspeisemittel (9) während der ersten Betriebsphase ein brennbares Gemisch aus Wasserstoff und/oder dem Kohlenwasserstoff einerseits und einem sauerstoffhaltigen Gas andererseits sowie während der zweiten Betriebsphase nur ein sauerstoffhaltiges Gas in die CO-Oxidationsstufe (7) eingespeist werden.

6. Verfahren nach Anspruch 4 oder 5, weiter
**dadurch gekennzeichnet, daß**
beim Betrieb einer Vorrichtung nach Anspruch 3 der Ausgang der CO-Entfernungseinheit (6, 7) zu Beginn der ersten Betriebsphase direkt mit der Brennerzufuhrleitung (14) und beim Übergang zum Normalbetrieb am Ende der zweiten Betriebsphase mit dem betreffenden Eingang des Brennstoffzellensystems (12) verbunden wird.

7. Verfahren nach einem der Ansprüche 4 bis 6, weiter
**dadurch gekennzeichnet, daß**
während des Aufheizvorgangs der Gasdruck im System von null an bis zum Normalbetriebsdruck erhöht wird.

8. Verfahren nach einem der Ansprüche 4 bis 7, weiter
**dadurch gekennzeichnet, daß**
das heiße Verbrennungsabgas (22) der katalytischen Brennereinheiten (15, 16) zum Aufheizen eines Kühlkreislaufs eines Brennstoffzellensystems (12) benutzt wird.

9. Verfahren nach einem der Ansprüche 4 bis 8, weiter
**dadurch gekennzeichnet, daß**
das Verbrennungsabgas (22) der katalytischen Brennereinheiten (15, 16) während des Aufheizvorgangs durch Heizkanäle hindurchgeleitet wird, die in einer oder mehreren, nicht aktiv beheizten Anlagenkomponenten vorgesehen sind.

## Claims

1. Device for water vapour re-formation of a hydrocarbon with
- a vaporizer (2),
- an initial re-forming unit, with at least one initial re-forming stage (3, 4), connected to the outlet side of the vaporizer,
- a main re-former (5) connected to the outlet side of the initial re-forming unit,
- a CO-removal unit connected to the outlet side of the main re-former with a CO-shifts stage (6) and/or a CO-oxidation stage (7) and
- at least one catalytic burner unit (15, 16)
**characterized in that**
- a first catalytic burner unit (15) is in thermal contact with the vaporizer (2) and a second catalytic burner unit (16) is in thermal contact with the main re-former (5) by means of a segregating medium (20, 21) which is, in each case, heat-conducting.

2. Device in accordance with claim 1, further
**characterized in that**
- the initial re-forming unit comprises two serially disposed, initial re-forming stages (3, 4) and the CO-removal unit comprises a CO-shift stage (6) and a CO-oxidation stage (71) connected to it on the outlet side, whereby one initial re-forming stage (3) is thermally connected to the CO-oxidation stage (7) and the other initial re-reforming stage (4) is thermally connected to the CO-shift stage (6), and
- means (8, 9) for closing off the connection between the CO-shift stage (6) and the CO-oxidation stage (7) and for intermediate feeding of material into the CO-oxidation stage are provided.

3. Device in accordance with claim 1 or 2, further
**characterized by**
a reversing-valve (11), with which the outlet of the CO-removal unit (6, 7) can be selectively directly connected to a burner feed conduit (14) or to a gas intake of a fuel compartment system (12).

4. Process for water-vapour re-forming of a hydrocarbon by means of a device in accordance with one of the claims 1 to 3, in which
- in the hot, normal operation, the hydrocarbon to be reformed and water are fed into the vaporizer (2) and are there formed into a hydrocarbon/water vapour mixture which is supplied to at least one initial re-forming stage (3, 4) and from there is further directed into the main re-former (5), where the hydrocarbon is re-formed, and the carbon monoxide contained in the reformate gas that is formed is at least partially removed in the CO-removal unit (6, 7),
**characterized in that**
- a heating-up process is carried out when starting from cold, while a combustible mixture made of supplied hydrogen and/or hydrocarbon on the one band and an oxygen-containing gas are fed, in a first operational stage, into the two catalytic burner units (15, 16), and are there catalytically burnt, and, in a following, second operational stage, the external supply of the hydrogen or hydrocarbon is ended with the catalytic burner units, water and the hydrocarbon are fed into the vaporizer (2), with a lower proportion of hydrocarbon than in normal operation, and are heated, and the heated mixture is directed into the initial re-forming unit (3, 4) and from there is further directed into the catalytic burner units (15, 16) and is there catalytically burnt, and, following the second operational phase, a transition to normal operation occurs, for which the portion of hydrocarbon added into the vaporizer is increased and the feeding-in of the reformate gas produced into the catalytic burner units (15, 16) is reduced.

5. Process in accordance with claim 4, further
**characterized in that**
when operating a device in accordance with claim 2, the connection between the CO-shift stage and the CO-oxidation stage (7) is severed at the start of the first operational stage and is opened at the start of the second operational stage, and a combustible mixture of hydrogen and/or the hydrocarbon and a gas containing oxygen are fed in, during the first operational stage, via the intermediate feeding-in means (9), and, during the second operational phase, only an oxygen-containing gas is fed into the CO-oxidation stage (7).

6. Process in accordance with claim 4 or 5, further
**characterized in that**
when operating a device in accordance with claim 3, the outlet of the CO-removal unit (6, 7) is directly connected to the burner feed conduit (14) at the start of the first operational stage and, at the time of the transition to normal operation, at the end of the second operational stage, is connected to the relevant inlet of the fuel compartment system (12).

7. Process in accordance with one of claims 4 to 6, further
**characterized in that**
during the heating-up process, the gas pressure in the system is increased from zero onwards up to normal operational pressure.

8. Process in accordance with one of claims 4 to 7, further
**characterized in that**
the hot combustion waste-gas (22) of the catalytic burner units (15, 16) is used for heating up a cooling circuit of a fuel compartment system (12).

9. Process in accordance with one of claims 4 to 8, further
**characterized in that**
the combustion waste-gas (22) of the catalytic burner units (15, 16) is directed through heating channels, provided in one or more non-actively heated installation components, during the heating-up process.

## Revendications

1. Dispositif de reformage à la vapeur d'un hydrocarbure comportant
- un évaporateur (2),
- une unité de préreformage branchée en aval de l'évaporateur et comportant au moins un étage de préreformage (3, 4),
- un reformeur principal (5) branché en aval de l'unité de préreformage,
- une unité d'élimination de CO branchée en aval du reformeur principal et comportant un étage de conversion déplacée de CO (6) et/ou un étage d'oxydation de CO (7) et
- au moins une unité de brûleur catalytique (15, 16)
**caractérisé en ce que**
- une première unité de brûleur catalytique (15) est en contact thermique avec l'évaporateur (2) et une deuxième unité de brûleur catalytique (16) est en contact thermique avec le reformeur principal (5), dans chaque cas par l'intermédiaire d'un moyen de séparation conduisant la chaleur (18, 19),
- la sortie de l'unité d'élimination de CO (6, 7) peut être reliée directement à l'entrée d'au moins l'une des unités de brûleurs catalytiques (15, 16), et
- le ou les étages de préreformage (3, 4) sont en contact thermique avec l'étage de conversion déplacée de CO (6) ou l'étage d'oxydation de CO (7), dans chaque cas par l'intermédiaire d'un moyen de séparation conduisant la chaleur (20, 21).

2. Dispositif selon la revendication 1, **caractérisé en outre en ce que**
- l'unité de préreformage comprend deux étages de préreformage (3, 4) disposés en série et l'unité d'élimination de CO comprend un étage de conversion déplacée de CO (6) et un étage d'oxydation de CO (7) branché en aval, où un étage de préreformage (3) est en contact thermique avec l'étage d'oxydation de CO (7) et l'autre étage de préreformage (4) est en contact thermique avec l'étage de conversion déplacée de CO (6), et
- des moyens (8, 9) sont prévus pour interrompre la communication entre l'étage de conversion déplacée de CO (6) et l'étage d'oxydation de CO (7) et pour l'introduction intermédiaire de substances dans l'étage d'oxydation de CO.

3. Dispositif selon la revendication 1 ou 2, **caractérisé en outre par** une soupape d'inversion (11) avec laquelle la sortie de l'unité d'élimination de CO (6, 7) peut être reliée au choix directement à une conduite d'alimentation de brûleur (14) ou à une entrée de gaz d'un système de pile à combustible (12).

4. Procédé de reformage à la vapeur d'un hydrocarbure au moyen d'un dispositif selon l'une des revendications 1 à 3, où
- pendant le fonctonnement normal à chaud, l'hydrocarbure à reformer et de l'eau sont introduits dans l'évaporateur (2) et ils sont mis sous forme d'un mélange hydrocarbure/vapeur qui est envoyé dans le ou les étages de préreformage (3, 4) et de là dans le reformeur principal (5) où l'hydrocarbure est reformé, et le monoxyde de carbone contenu dans le gaz de produit de reformage formé est éliminé au moins en partie dans l'unité d'élimination de CO (6, 7), **caractérisé en ce que** :
- lors d'un démarrage à froid, on met en oeuvre un processus de chauffage pendant lequel, dans une première phase de fonctionnement, un mélange combustible constitué par de l'hydrogène et/ou un hydrocarbure amené de l'extérieur d'une part et un gaz contenant de l'oxygène d'autre part est introduit dans les deux unités de brûleurs catalytiques (15, 16) et y est soumis à une combustion catalytique, dans une seconde phase de fonctionnement consécutive, l'apport externe de l'hydrogène ou de l'hydrocarbure dans les unités de brûleur catalytique est arrêté, de l'eau et l'hydrocarbure sont introduits dans l'évaporateur (2) en une proportion d'hydrocarbure plus faible que pendant le fonctionnement normal et y sont chauffés, le mélange chauffé est envoyé dans l'unité de préreformage (3, 4) et de là dans le reformeur principal (5), et le gaz de produit de reformage formé est envoyé dans les unités de brûleur catalytique (15, 16) et y est soumis à une combustion catalytique, et, après la deuxième phase de fonctionnement, on passe en fonctionnement normal et, pour ce faire, la proportion d'hydrocarbure introduite de manière dosée dans l'évaporateur est augmentée et l'introduction dans les unités de brûleurs catalytiques (15, 16) du gaz de produit de reformage produit est réduite.

5. Procédé selon la revendication 4, **caractérisé en outre en ce que**, pendant le fonctionnement d'un dispositif selon la revendication 2, la communication entre l'étage de conversion déplacée de CO (6) et l'étage d'oxydation de CO (7) est fermée au début de la première phase de fonctionnement et est ouverte au début de la seconde phase de fonctionnement et, par le biais du moyen d'introduction intermédiaire (9), pendant la première phase de fonctionnement, un mélange combustible d'hydrogène et/ou d'hydrocarbure d'une part et d'un gaz contenant de l'oxygène d'autre part est introduit dans l'étage d'oxydation de CO (7), et pendant la seconde phase de fonctionnement, seul un gaz contenant de l'oxygène est introduit dans l'étage d'oxydation de CO (7).

6. Procédé selon la revendication 4 ou 5, **caractérisé en outre en ce que**, pendant le fonctionnement d'un dispositif selon la revendication 3, la sortie de l'unité d'élimination de CO (6, 7) est reliée directement à la conduite d'alimentation de brûleur (14) au début de la première phase de fonctionnement et, lors du passage au fonctionnement normal, à la fin de la seconde phase de fonctionnement, elle est reliée à l'entrée correspondante du système de pile à combustible (12).

7. Procédé selon l'une des revendications 4 à 6, **caractérisé en outre en ce que**, pendant le processus de chauffage, la pression des gaz dans le système est augmentée de 0 à la pression de fonctionnement normale.

8. Procédé selon l'une des revendications 4 à 7, **caractérisé en outre en ce que** le gaz usé de combustion chaud (22) des unités de brûleurs catalytiques (15, 16) est utilisé pour le chauffage d'un circuit de refroidissement d'un système de pile à combustible (12).

9. Procédé selon l'une des revendications 4 à 8, **caractérisé en outre en ce que** le gaz usé de combustion (22) des unités de brûleurs catalytiques (15, 16) est amené, pendant le processus de chauffage, à passer dans des canaux chauffants qui sont prévus dans un ou plusieurs composants de l'installation qui ne sont pas chauffés activement.
